# EUROPEAN PATENT APPLICATION

(11) **EP 4 787 925 A1**
(43) Date of publication of application: **05.08.2026**
(21) Application number: 23953536.2
(22) Date of filing: 27.09.2023
(51) Int. Cl.: H04W 24/02

(54) **METHOD AND APPARATUS FOR SENDING AND RECEIVING INFORMATION**

(71) Applicant: 1FINITY INC., Kawasaki-shi, Kanagawa 211-8588 (JP)
(72) Inventor: SHAN, Yujia, Beijing 100022 (CN); WANG, Xin, Beijing 100022 (CN); LI, Guorong, Beijing 100022 (CN); YI, Su, Beijing 100022 (CN)
(74) Representative: Haseltine Lake Kempner LLP
(86) International application number: PCT/CN2023/122192
(87) International publication number: WO 2025/065383

(57) **Abstract**

Embodiments of this disclosure provide a method and apparatus for transmitting and receiving information. The method includes: generating first information by a terminal equipment; and transmitting the first information by the terminal equipment to a network device, the first information being related to artificial intelligence/machine learning (AI/ML) in wireless communication.

## Description

### Technical Field

This disclosure relates to the field of communication technologies.

### Background

With the commercialization of 5G technology, especially the large-scale expansion of the industrial Internet industry, in the field of wireless communications, there are many use cases of using AI (artificial intelligence) and ML (machine learning) algorithms to improve performance, such as using AI for CSI (channel state information) compression feedback, beam management, and wireless positioning, etc.

Implementations of artificial intelligence and machine learning (AI/ML) requires that a terminal equipment has AI/ML-related capabilities and conditions.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

In the current 3GPP protocol framework, there exists a mechanism where some terminal equipments feed their capabilities, states, conditions and preferences back to a network device (such as a gNB or a core network).

However, it was found by the inventor that there exists no specific feedback and communication mechanism in the related art for AI/ML-related information, such as information related to capabilities and conditions. In order to support applications of AI/ML algorithms in wireless communication networks, new signaling and mechanisms need to be added.

In order to solve at least one of the above problems, embodiments of this disclosure provide a method and apparatus for transmitting and receiving information.

According to a first aspect of the embodiments of this disclosure, there is provided a method for transmitting and receiving information, the method including: generating first information by a terminal equipment, the first information being information on artificial intelligence/machine learning (AI/ML) in wireless communication; and transmitting the first information by the terminal equipment to a network device.

According to a second aspect of the embodiments of this disclosure, there is provided a method for transmitting and receiving information, the method including: receiving first information by a first network device from a terminal equipment, the first information being related to artificial intelligence/machine learning (AI/ML) in wireless communication.

According to a third aspect of the embodiments of this disclosure, there is provided a method for transmitting and receiving information, the method including: receiving first information by a second network device from a terminal equipment, the first information being related to artificial intelligence/machine learning (AI/ML) in wireless communication.

According to a fourth aspect of the embodiments of this disclosure, there is provided an apparatus for transmitting and receiving information, provided in a terminal equipment, the apparatus including: a generating unit configured to generate first information, the first information being information on artificial intelligence/machine learning (AI/ML) in wireless communication; and a first transmitting unit configured to transmit the first information to a network device.

According to a fifth aspect of the embodiments of this disclosure, there is provided an apparatus for transmitting and receiving information, provided in a first network device, the apparatus including: a second receiving unit configured to receive first information from a terminal equipment, the first information being related to artificial intelligence/machine learning (AI/ML) in wireless communication.

According to a sixth aspect of the embodiments of this disclosure, there is provided an apparatus for transmitting and receiving information, provided in a second network device, the apparatus including: a third receiving unit configured to receive first information from a terminal equipment, the first information being related to artificial intelligence/machine learning (AI/ML) in wireless communication.

According to a seventh aspect of the embodiments of this disclosure, there is provided a computer readable program, which, when executed in an apparatus for transmitting and receiving information or a terminal equipment, will cause the apparatus for transmitting and receiving information or the terminal equipment to carry out the method for transmitting and receiving information as described in the embodiment of the first aspect of this disclosure.

According to an eighth aspect of the embodiments of this disclosure, there is provided a computer readable program, which, when executed in an apparatus for transmitting and receiving information or a first network device, will cause the apparatus for transmitting and receiving information or the first network device to carry out the method for transmitting and receiving information as described in the embodiment of the second aspect of this disclosure.

According to a ninth aspect of the embodiments of this disclosure, there is provided a computer readable program, which, when executed in an apparatus for transmitting and receiving information or a second network device, will cause the apparatus for transmitting and receiving information or the second network device to carry out the method for transmitting and receiving information as described in the embodiment of the third aspect of this disclosure.

According to a tenth aspect of the embodiments of this disclosure, there is provided a computer readable medium, including a computer readable program, which will cause an apparatus for transmitting and receiving information or a terminal equipment to carry out the method for transmitting and receiving information as described in the embodiment of the first aspect of this disclosure.

According to an eleventh aspect of the embodiments of this disclosure, there is provided a computer readable medium, including a computer readable program, which will cause an apparatus for transmitting and receiving information or a first network device to carry out the method for transmitting and receiving information as described in the embodiment of the second aspect of this disclosure.

According to a twelfth aspect of the embodiments of this disclosure, there is provided a computer readable medium, including a computer readable program, which will cause an apparatus for transmitting and receiving information or a second network device to carry out the method for transmitting and receiving information as described in the embodiment of the third aspect of this disclosure.

An advantage of the embodiments of this disclosure exists in that the terminal equipment transmits information related to artificial intelligence/machine learning (AI/ML) in wireless communication to the network device. Hence, a feedback and communication mechanism for AI/ML-related information may be established between the terminal equipment and the network device, thereby efficiently supporting applications of AI/ML algorithms in wireless communication networks.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiments.
FIG. 1 is schematic diagram of a communication system of an embodiments of this disclosure;
FIG. 2 is a schematic diagram of the method for transmitting and receiving information of an embodiments of this disclosure;
FIG. 3 is an interaction graph of an implementation of the method for transmitting and receiving information of the embodiments of this disclosure;
FIG. 4 is an interaction graph of another implementation of the method for transmitting and receiving information of the embodiments of this disclosure;
FIG. 5 is an interaction graph of a further implementation of the method for transmitting and receiving information of the embodiments of this disclosure;
FIG. 6 is an interaction graph of still another implementation of the method for transmitting and receiving information of the embodiments of this disclosure;
FIG. 7 is another schematic diagram of the method for transmitting and receiving information of an embodiments of this disclosure;
FIG. 8 is a further schematic diagram of the method for transmitting and receiving information of an embodiments of this disclosure;
FIG. 9 is a schematic diagram of the apparatus for transmitting and receiving information of an embodiments of this disclosure;
FIG. 10 is another schematic diagram of the apparatus for transmitting and receiving information of the embodiments of this disclosure;
FIG. 11 is a further schematic diagram of the apparatus for transmitting and receiving information of the embodiments of this disclosure;
FIG. 12 is a block diagram of a systematic structure of a terminal equipment of an embodiments of this disclosure;
FIG. 13 is a block diagram of a systematic structure of a first network device of an embodiments of this disclosure; and
FIG. 14 is a block diagram of a systematic structure of a second network device of an embodiments of this disclosure.

### Detailed Description

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, as well as 5G, 5G-Advanced, New Radio (NR) and 6G in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

Wherein, the base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. For example, a 5G base station gNB may include a gNB CU and one or more gNB DUs, wherein the CU/DU is a logical node of the gNB having a part of functions of the gNB. And a term "cell" may refer to a base station and/or its coverage area, depending on a context of the term.

In the embodiments of this disclosure, 'a network device' may further include a network device or a network element of a core network and/or a higher layer network. For example, the core network includes an EPC (corresponding to a 4G core network) and/or a 5GC (corresponding to a 5G core network).

The EPC includes but is not limited to the following network elements: an MME (mobility management entity), an SGW (serving gateway), a PGW (PDN gateway), and a PCRF (policy and charging rules function), etc.

The 5GC includes but is not limited to the following network elements: an AMF (access and mobility management function), an LMF (location management function), an SMF (session management function), a UPF (user plane function), aPCF (policy control function), UDM (unified data management), an AUSF (authentication server function), and a UDR (unified data repository), etc.

In the embodiments of this disclosure, the term "user equipment (UE)" or "a terminal equipment (TE) or terminal device" refers to, for example, an equipment accessing to a communication network and receiving network services via a network device. The terminal equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above. "A device" in this text may refer to a network device, and may also refer to a terminal equipment.

Scenarios of the embodiments of this disclosure shall be described below by way of examples; however, this disclosure is not limited thereto.

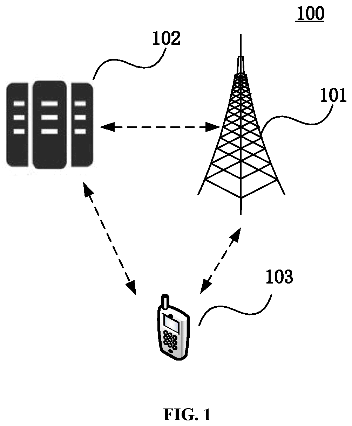

FIG. 1 is a schematic diagram of a communication system of this disclosure. As shown in FIG. 1, a communication system 100 may include a first network device 101, a second network device 102 and a terminal equipment 103. For the sake of simplicity, an example having only one terminal equipment and one network device is schematically given in FIG. 1; however, the embodiments of this disclosure are not limited thereto.

In the embodiments of this disclosure, the first network device 101 is, for example, a base station, such as a gNB.

The second network device 102 is, for example, one or more network devices or network elements of a core network and/or a higher layer network.

In the embodiments of this disclosure, in various applications of AI/ML air interface, for an AI/ML model deployed at the terminal equipment side 103 (UE side), tasks that AI/ML needs to complete may be defined by functionalities and capabilities and conditions of whether the AI/ML model supports may be indirectly determined.

For example, the functionalities may be defined by more specific concept features or feature groups. Final operations of the AI/ML model (such as selection, activation, deactivation, switching) will be determined by functionalities configured by the network side, and the selection of the functionalities themselves needs to be determined after information exchange between the network device (such as the first network device 101 and/or the second network device 102) and the terminal equipment.

In the embodiments of this disclosure, existing services or services that may be implemented in the future may be performed between the network device 101 and the terminal equipment 102. For example, such services may include but not limited to an enhanced mobile broadband (eMBB), massive machine type communication (MTC), and ultra-reliable and low-latency communication (URLLC), etc.

In the embodiments of this disclosure, high layer signaling may be, for example, radio resource control (RRC) signaling; for example, it is referred to an RRC message, which includes an MIB, system information, and a dedicated RRC message; or, it is referred to an as an RRC information element (RRC IE). Higher-layer signaling may also be, for example, medium access control (MAC) signaling, or an MAC control element (MAC CE); however, this disclosure is not limited thereto.

### Embodiment of a first aspect

The embodiments of this disclosure provide a method for transmitting and receiving information, which shall be described from a terminal equipment side.

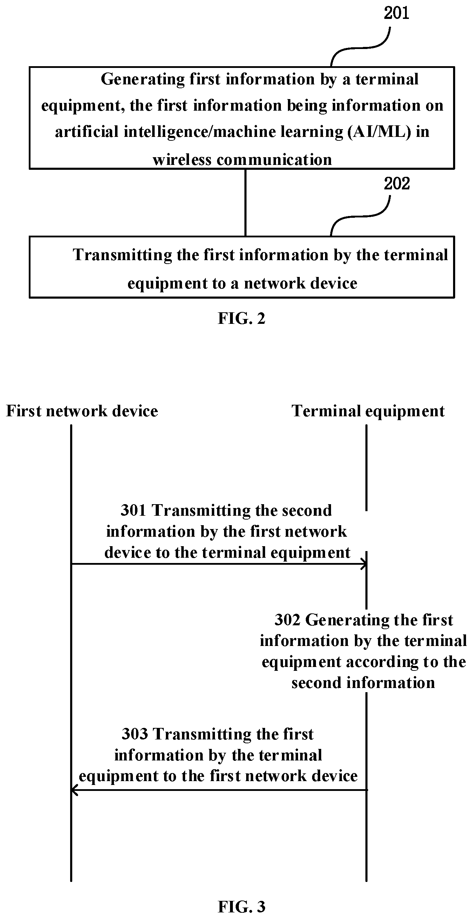

FIG. 2 is a schematic diagram of the method for transmitting and receiving information of the embodiments of this disclosure. As shown in FIG. 2, the method includes:
201: generating first information by a terminal equipment, the first information being information on artificial intelligence/machine learning (AI/ML) in wireless communication; and
202: transmitting the first information by the terminal equipment to a network device.

It should be noted that FIG. 2 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 2.

In some embodiments, the first information is capability information and/or condition information related to artificial intelligence/machine learning (AI/ML) in wireless communication.

In some embodiments, the first information is capability information, that is, the first information is related to a capability of the terminal equipment, the capability being related to artificial intelligence/machine learning (AI/ML) in wireless communication.

For example, that the capability is related to artificial intelligence/machine learning (AI/ML) in wireless communication refers to that when the terminal equipment possesses this capability, the terminal equipment is able to support all or a part of the functionalities of artificial intelligence/machine learning (AI/ML) in wireless communication, the all or the part of the functionalities being possibly related to one or more of operation, configuration, scheduling, management and performance of AI/ML.

In some embodiments, the first information is condition information, the condition information being related to artificial intelligence/machine learning (AI/ML) in wireless communication.

For example, the condition information being related to artificial intelligence/machine learning (AI/ML) in wireless communication refers to a status or factor that may affect a performance of AI/ML in wireless communication. This status or factor may come from the terminal equipment, or may come from external environments out of the terminal equipment, such as a wireless channel. Occurrence of the condition usually affects a performance of an AI/ML model currently deployed in the terminal equipment while the capability of terminal remains unchanged.

For example, the condition is that a movement speed of the terminal equipment is greater than a threshold. That is, when the movement speed of the terminal equipment exceeds the threshold, data are reported.

In some embodiments, the network device includes a first network device and/or a second network device. The first network device is a base station, such as a gNB, and the second network device is one or more network devices or network elements of a core network and/or a higher layer network, such as a location management function (LMF).

Different situations shall be described below in detail.

In some embodiments, the terminal equipment generates and transmits the first information to the network device according to second information from the network device, i.e. the second information is used to instruct the terminal equipment to generate and transmit the first information to the network device. For example, the terminal equipment reports the first information according to a requirement of the network device.

FIG. 3 is an interaction graph of an implementation of the method for transmitting and receiving information of the embodiments of this disclosure. As shown in FIG. 3, the method includes:
301: transmitting the second information by the first network device to the terminal equipment;
302: generating the first information by the terminal equipment according to the second information; and
303: transmitting the first information by the terminal equipment to the first network device.

The first information is related to the capability of the terminal equipment, the capability being related to artificial intelligence/machine learning (AI/ML) in wireless communication.

In some embodiments, the first network device is a base station, such as a gNB.

In some embodiments, the second information is transmitted by the first network device via RRC signaling or other signaling, and/or, the first information is transmitted via RRC signaling or other signaling.

In some embodiments, the second information is used to request the terminal equipment to generate and transmit the first information to the network device. For example, for RRC, the second information is transmitted via enquiry signaling.

For example, the gNB transmits the second information to the terminal equipment via UECapabilityEnquiry or other RRC signaling or other MAC CE signaling, requesting to report the first information, the first information being related to the capability of the terminal equipment, the capability being related to artificial intelligence/machine learning (AI/ML) in wireless communication.

After receiving the second information, the terminal equipment transmits the first information via RRC signaling or other signaling, that is, reports information related to the capability of the terminal equipment. For example, the terminal equipment reports the first information to the gNB via UECapabilityInformation or other RRC signaling or MAC CE signaling.

In some embodiments, the second information indicates content of the first information, that is, the first network device indicates the content of the first information reported by the terminal equipment via the second information;
or, the second information does not indicate the content of the first information and only requires the terminal equipment to transmit the first information, that is, the first network device does not indicate the content of the first information reported by the terminal equipment.

In some embodiments, the second information may further indicate a reporting priority of different content of the first information, and the terminal equipment respectively reports different content of the first information according to the priorities. That is, different content of the first information have different a reporting priority.

That is, the first network device instructs the terminal equipment via the second information to respectively report different content of the first information according to the priorities indicated in the second information.

For example, the content of the first information include at least first capability information and second capability information, and the second information instructs the terminal equipment to preferentially report one of the first capability information and the second capability information, or
the contents of the first information at least include a first part and a second part in the first capability information, and the second information instructs the terminal equipment to preferentially report one of the first part and the second part.

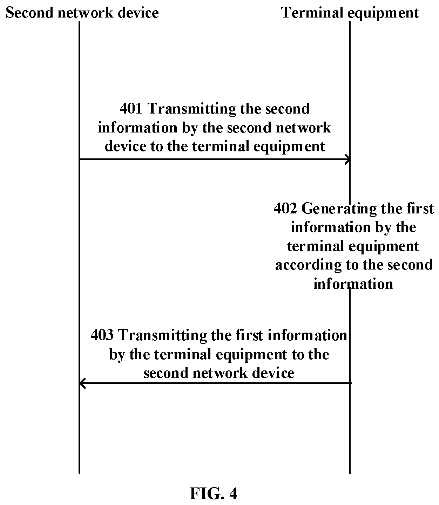

FIG. 4 is an interaction graph of another implementation of the method for transmitting and receiving information of the embodiments of this disclosure. As shown in FIG. 4, the method includes:
401: transmitting the second information by the second network device to the terminal equipment;
402: generating the first information by the terminal equipment according to the second information; and
403: transmitting the first information by the terminal equipment to the second network device.

The first information is related to the capability of the terminal equipment, the capability being related to artificial intelligence/machine learning (AI/ML) in wireless communication.

In some embodiments, the second network device is one or more network devices or network elements of a core network and/or a higher layer network, such as a location management function (LMF).

In some embodiments, the second information is transmitted by the second network device via LPP signaling or signaling for a specific positioning method or other signaling. After receiving the second information, the terminal equipment transmits the first information via LPP signaling or other signaling, that is, reporting information related to the capability of the terminal equipment, the capability being related to artificial intelligence/machine learning (AI/ML) in wireless communication.

For example, the LMF transmits the second information to the terminal equipment via RequestCapability or other LPP signaling, requesting to report the first information, and the terminal equipment reports the first information to the LMF via ProvideCapability or other LPP signaling.

For another example, the LMF transmits the second information via signaling for a specific positioning method. When output of the AI/ML model is TDOA, the LMF transmits the second information via "nr-DL-TDOA-RequestCapabilities". After receiving the second information, the terminal equipment transmits the first information via "nr-DL-TDOA-ProvideCapabilities" signaling.

In some embodiments, the second information indicates content of the first information, that is, via the second information, the second network device indicates the content of the first information reported by the terminal equipment;
or, the second information does not indicate the content of the first information and only requires the terminal equipment to transmit the first information. That is, the second network device does not indicate the content of the first information reported by the terminal equipment.

In some embodiments, for the implementations shown in FIG. 3 and FIG. 4, the first information is related to the capability of the terminal equipment, the capability being related to artificial intelligence/machine learning (AI/ML) in wireless communication.

In some embodiments, the first information is at least one piece of the following information:
a terminal feature or a feature group, the terminal feature or the feature group being related to artificial intelligence/machine learning (AI/ML) in wireless communication; in some embodiments, the feature characterizes a feature related to artificial intelligence/machine learning (AI/ML) in wireless communication, and the feature group is a combination of one or more similar features; for example, "supporting an AI/ML compression use case" is a feature, while "supporting an AI/ML CSI use case" is a feature group;
functionality information, the functionality information being related to artificial intelligence/machine learning (AI/ML) in wireless communication; in some embodiments, the functionality is a functionality or sub-functionality, a functionality ID/index, functionality-related meta-information and/or other information, defined in AI/ML lifecycle management; for example, "model training" is an AI/ML-related functionality, and that a model ID=N (N is a positive integer) refers to all or a part of functionality information of the function "model training"; and
other capability information, the other capability information being existing capability information related to artificial intelligence/machine learning (AI/ML).

For example, the first information may possibly be a combination of a newly-added capability and an existing capability, such as a combination of a capability supporting an existing RS (e.g. a CSI-RS) and a capability supporting a use case as a new technology (e.g. AI for CSI).

For example, the first information may express a combination of an existing capability and a new capability by using an information element (IE), or, it may respectively support by using multiple information elements (IEs).

In some embodiments, for the implementations shown in FIG. 3 and FIG. 4, the capability at least includes one or more of the following capabilities or a capability obtained by combining multiple following capabilities:
a capability to support channel measurement content needed in application of artificial intelligence/machine learning (AI/ML) in wireless communication, such as layer 1 (e.g. L1-RSRP) measurement, layer 3 (e.g. L3-RSRP) measurement, a channel impact response (CIR), a power delay profile (PDP), a delay profile (DP), time-related measurement (e.g. TDOA, RSTD, TOA), angle-related measurement (e.g. oA, DoA), measurement of an LOS/NLOS indicator, and measurement of other physical quantities including channel power, time, and phase, etc.;
a capability to support reference signal configuration, such as including various patterns, layers, frequencies and bands related to a reference signal (a CSI-RS, a DMRS, an SRS, a PRS);
a capability to support an artificial intelligence/machine learning (AI/ML) use case in wireless communication, such as one or more of use cases of CSI compression, CSI prediction, beam space prediction, beam time prediction, direct wireless positioning and indirect wireless positioning;
a capability to support artificial intelligence/machine learning (AI/ML) lifecycle management in wireless communication, such as data collection, model storage, model training, and model supervision, etc.; or
a capability to support artificial intelligence/machine learning (AI/ML) model generalization in wireless communication.

In some embodiments, the capability obtained by combining multiple capabilities refers to a capability jointly determined by multiple capabilities in the above capabilities.

In some embodiments, the capability at least includes a capability to support combination of an artificial intelligence/machine learning (AI/ML) use case in wireless communication and artificial intelligence/machine learning (AI/ML) lifecycle management in wireless communication, the capability to support combination of an artificial intelligence/machine learning (AI/ML) use case in wireless communication and artificial intelligence/machine learning (AI/ML) lifecycle management in wireless communication at least including one or more of data collection, model storage, model training, or model supervision.

For example, the data collection is capability information combined with use cases, such as data types, data accuracy, and data collection delay, etc.;
for example, the model storage is storage capability information combined with use cases;
for example, the model training is training capability (such as resources, battery status) information combined with use cases;
for example, the model supervision is information on a capability to obtain true values and a capability to calculate metrics combined with use cases.

In some embodiments, the capability to support artificial intelligence/machine learning (AI/ML) model generalization in wireless communication is a capability to support artificial intelligence/machine learning (AI/ML) model generalization in wireless communication for specific use cases.

For example, for a case of CSI compression, the capability to support AI/ML model generalization includes a capability to support scenarios and/or a capability to support different speeds of the terminal;
for example, for a case of beam management, the capability to support AI/ML model generalization includes a capability to support variable A and B sub-beam sets, and/or a capability to support different beam codebooks, and/or a capability to support different antenna dimension configurations;
for example, for a case of wireless positioning, the capability to support AI/ML model generalization includes a capability to support scenarios, and/or a capability to support different speeds of the terminal, and/or a capability to support different cells and stations, and/or a capability to support channels under different NLOS probabilities.

In some embodiments, the terminal equipment generates and transmits the first information to the network device according to third information from the network device, that is, the third information is used to instruct the terminal equipment to generate and transmit the first information to the network device. For example, the terminal equipment reports the first information according to a configuration of the network device.

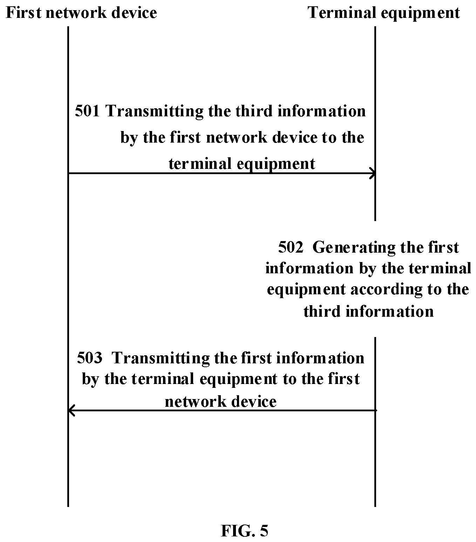

FIG. 5 is an interaction graph of a further implementation of the method for transmitting and receiving information of the embodiments of this disclosure. As shown in FIG. 5, the method includes:
501: transmitting the third information by the first network device to the terminal equipment;
502: generating the first information by the terminal equipment according to the third information; and
503: transmitting the first information by the terminal equipment to the first network device.

The first information is condition information, the condition information being related to artificial intelligence/machine learning (AI/ML) in wireless communication.

In some embodiments, the first network device is a base station, such as a gNB.

In some embodiments, the third information is, for example, configuration information. For example, according to this configuration information, the terminal equipment periodically feeds back the first information, or feeds back the first information when a preset condition is satisfied, or feeds back the first information based on a timer.

In some embodiments, the third information is transmitted by the first network device via RRC signaling or other signaling.

In some embodiments, the terminal equipment determines whether the first condition is satisfied after receiving the third information. When the first condition is satisfied, the terminal equipment generates and transmits the first information to the first network device. The first information is transmitted by the terminal equipment via RRC signaling or an MAC CE or UCI signaling or other signaling.

For example, the gNB configures the terminal equipment via Otherconfig in RRCReconfiguration or other RRC signaling, requesting to report the first information. After the terminal equipment receives the configuration of the gNB, it checks whether the first condition is satisfied, and performs at least one of the following actions:
when the first condition is satisfied, the terminal equipment reports the first information via UEAssistanceInformation or other RRC signaling; and
when the first condition is not satisfied, the terminal equipment does not perform any action.

In some embodiments, the first condition is that:
the terminal equipment has not transmitted the first information to the first network device after receiving the third information, or,
the terminal equipment has transmitted the first information to the first network device after receiving the third information, the first information that needs to be reported currently is different from the first information reported last time, and a timer related to reporting of the first information is not running.

In some embodiments, when the first condition is satisfied, the terminal equipment further sets a timer related to the reporting of the first information. For example, the terminal equipment has not transmitted the first information to the first network device after receiving the third information; or, the terminal equipment has transmitted the first information to the first network device after receiving the third information, the first information that needs to be reported currently is different from the first information reported last time, and the timer related to the reporting of the first information is not running; the terminal equipment sets the timer related to the reporting of the first information, and transmits the first information to the first network device.

In some embodiments, the terminal equipment further determines whether a second condition is satisfied after receiving the third information,

When the second condition is satisfied, the terminal equipment generates and transmits the first information to the second network device,
for example, the second condition is identical to or partially identical to or different from the first condition.

In some embodiments, the number of the timer may be one or more.

In some embodiments, when multiple timers are set, the timers operate independently; or, at least two of the timers operate together; for example, for some information, it may be reported only when conditions of a first timer and a second timer are satisfied simultaneously.

In some embodiments, the terminal equipment selects different timers according to contents of the third information to perform actions. For example, corresponding to different AI/ML use cases or lifecycle management, the terminal equipment may select different timers according to contents configured by the gNB to perform actions.

In some embodiments, the third information includes first configuration information, the first configuration information requiring the terminal equipment to report the first information, or,
the third information includes first configuration information and second configuration information, the first configuration information requiring the terminal equipment to report the first information, and the second configuration information includes one or more of the content of the first information reported by the terminal equipment, a scope of the content of the first information reported by the terminal equipment, and a time when the terminal equipment reports the first information.

For example, the second configuration information includes the content of the first information reported by the terminal equipment, and the terminal equipment reports all the contents indicated by the second configuration information;
for example, the second configuration information includes the scope of the content of the first information reported by the terminal equipment, and the terminal equipment reports all the contents indicated by the second configuration information or selects a part of the contents to report;
for example, the second configuration information includes the time when the terminal equipment reports the first information, such as indicating the time of reporting the first information by configuring a threshold, such as reporting the first information when the movement speed of the terminal equipment is greater than the threshold.

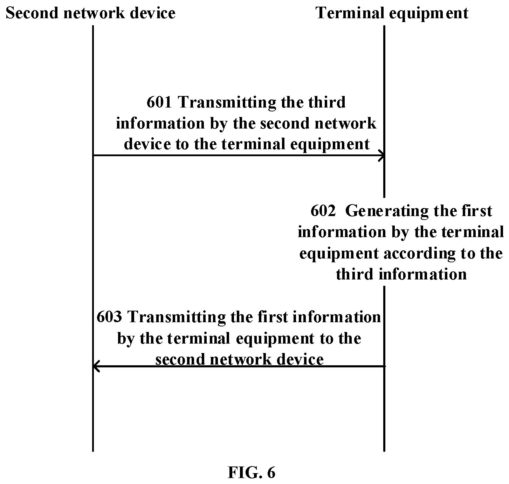

FIG. 6 is an interaction graph of still another implementation of the method for transmitting and receiving information of the embodiments of this disclosure. As shown in FIG. 6, the method includes:
601: transmitting the third information by the second network device to the terminal equipment;
602: generating the first information by the terminal equipment according to the third information; and
603: transmitting the first information by the terminal equipment to the second network device.

The first information is condition information, the condition information being related to artificial intelligence/machine learning (AI/ML) in wireless communication.

In some embodiments, the second network device is one or more network devices or network elements of a core network and/or a higher layer network, such as a location management function (LMF).

In some embodiments, the third information is transmitted by the second network device via LPP signaling or other signaling, and/or the first information is transmitted via LPP signaling or other signaling.

For example, the LMF transmits the third information to the terminal equipment via RequestAssistanceData, and after receiving the third information, the terminal equipment transmits the first information to the second network device via ProvideAssistanceData.

Reference may be made to the implementation shown in FIG. 5 for specific contents in this implementation, which shall not be repeated herein any further.

In some embodiments, the terminal equipment generates and transmits the first information to the first network device according to a predetermined regulation. That is, the first network device and the terminal equipment specify reported contents or reporting conditions in an agreed manner.

For example, the content of the first information reported by the terminal equipment and/or conditions for reporting the first information are specified in a protocol.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It can be seen from the above embodiment that the terminal equipment transmits information related to artificial intelligence/machine learning (AI/ML) in wireless communication to the network device. Hence, a feedback and communication mechanism for AI/ML-related information may be established between the terminal equipment and the network device, thereby efficiently supporting applications of AI/ML algorithms in wireless communication networks.

### Embodiment of a second aspect

The embodiments of this disclosure provide a method for transmitting and receiving information, which shall be described from a first network device side. This embodiment corresponds to the embodiment of the first aspect, and contents in this embodiment identical to those in the embodiment of the first aspect shall not be described herein any further.

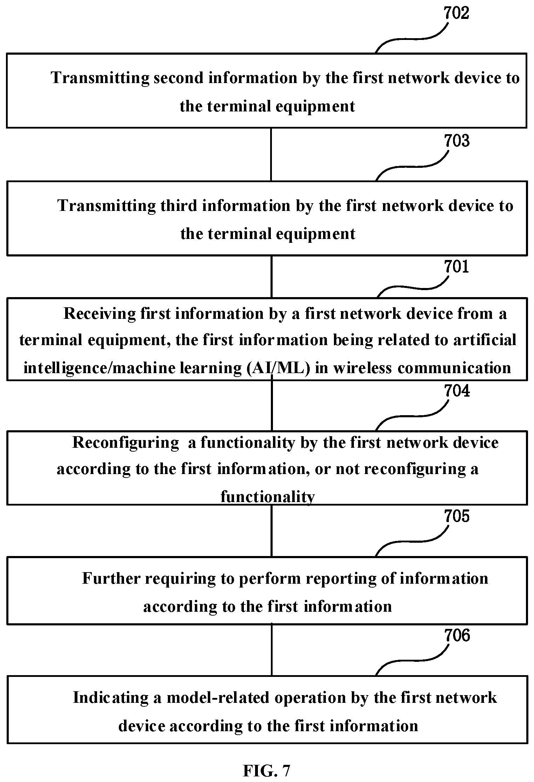

FIG. 7 is another schematic diagram of the method for transmitting and receiving information of an embodiments of this disclosure. As shown in FIG. 7, the method includes:
701: receiving first information by a first network device from a terminal equipment, the first information being related to artificial intelligence/machine learning (AI/ML) in wireless communication.

In some embodiments, the method further includes:
702: transmitting second information by the first network device to the terminal equipment, the second information being used to instruct the terminal equipment to generate the first information and transmit it to the first network device.

In some embodiments, the method further comprises:
703: transmitting third information by the first network device to the terminal equipment, the third information being used to instruct the terminal equipment to generate the first information and transmit it to the first network device.

In some embodiments, operations 702 and 703 are optional, and the method may include one or both of operations 702 and 703, or may not include operations 702 and 703. Furthermore, an order of executing operations 702 and 703 is not limited.

In some embodiments, the method further includes one or more of the following operations:
704: reconfiguring a functionality by the first network device according to the first information, or not reconfiguring a functionality, the functionality being related to artificial intelligence/machine learning (AI/ML) in wireless communication;
705: further requiring to perform reporting of information according to the first information ;
706: indicating a model-related operation by the first network device according to the first information, such as model selection, model switching, and data collection, etc.

In some embodiments, operations 704-706 are optional, and the method may include one or more of operations 704-706, or may not include operations 704-706. Furthermore, an order of executing operations 704-706 is not limited.

Reference may be made to the disclosure contained in the embodiment of the first aspect for specific contents of the above operations, which shall not be repeated herein any further.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It can be seen from the above embodiment that the terminal equipment transmits information related to artificial intelligence/machine learning (AI/ML) in wireless communication to the network device. Hence, a feedback and communication mechanism for AI/ML-related information may be established between the terminal equipment and the network device, thereby efficiently supporting applications of AI/ML algorithms in wireless communication networks.

### Embodiment of a third aspect

The embodiments of this disclosure provide a method for transmitting and receiving information, which shall be described from a second network device side (a core network and/or a higher layer network side). This embodiment corresponds to the embodiment of the first aspect, and contents in this embodiment identical to those in the embodiment of the first aspect shall not be described herein any further.

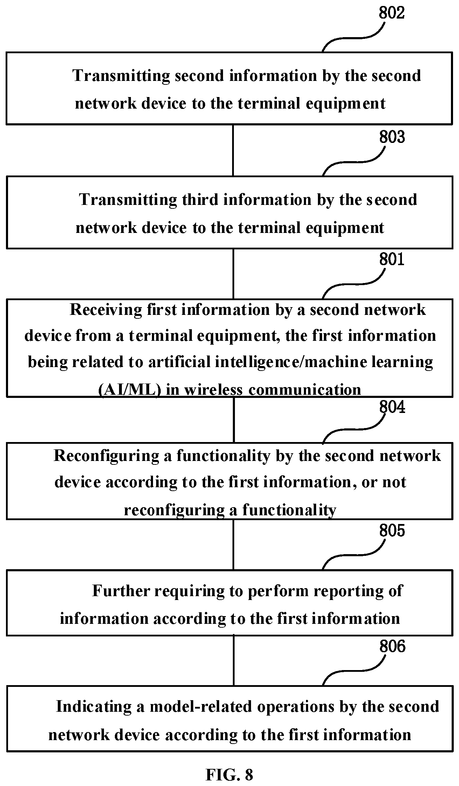

FIG. 8 is a further schematic diagram of the method for transmitting and receiving information of an embodiments of this disclosure. As shown in FIG. 8, the method includes:
801: receiving first information by a second network device from a terminal equipment, the first information being related to artificial intelligence/machine learning (AI/ML) in wireless communication.

In some embodiments, the method further includes one or more of the following operations:
802: transmitting second information by the second network device to the terminal equipment, the second information being used to instruct the terminal equipment to generate the first information and transmit the first information to the second network device;
803: transmitting third information by the second network device to the terminal equipment, the third information being used to instruct the terminal equipment to generate the first information and transmit it to the second network device.

In some embodiments, operations 802 and 803 are optional, and the method may include one or both of operations 802 and 803, or may not include operations 802 and 803. Furthermore, an order of executing operations 802 and 803 is not limited.

In some embodiments, the method further includes one or more of the following operations:
804: reconfiguring a functionality by the second network device according to the first information, or not reconfiguring a functionality, the functionality being related to artificial intelligence/machine learning (AI/ML) in wireless communication;
805: further requiring to perform reporting of information according to the first information;
806: indicating a model-related operation by the second network device according to the first information, such as model selection, model switching, and data collection, etc.

In some embodiments, operations 804-806 are optional, and the method may include one or more of operations 804-806, or may not include operations 804-806. Furthermore, an order of executing operations 804-806 is not limited.

Reference may be made to the disclosure contained in the embodiment of the first aspect for specific contents of the above operations, which shall not be repeated herein any further.

It can be seen from the above embodiment that the terminal equipment transmits information related to artificial intelligence/machine learning (AI/ML) in wireless communication to the network device. Hence, a feedback and communication mechanism for AI/ML-related information may be established between the terminal equipment and the network device, thereby efficiently supporting applications of AI/ML algorithms in wireless communication networks.

### Embodiment of a fourth aspect

The embodiments of this disclosure provide an apparatus for transmitting and receiving information. The apparatus may be, for example, a terminal equipment, or one or some components or assemblies configured in the terminal equipment. This embodiment corresponds to the embodiment of the first aspect, and contents in this embodiment identical to those in the embodiment of the first aspect shall not be described herein any further.

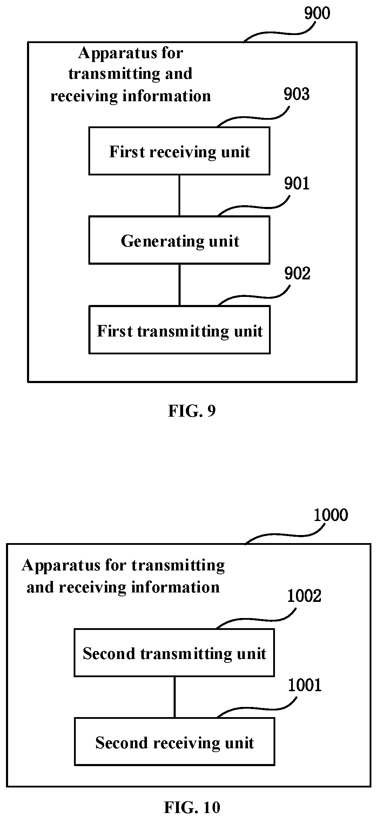

FIG. 9 is a schematic diagram of the apparatus for transmitting and receiving information of an embodiments of this disclosure. As shown in FIG. 9, an apparatus 900 for transmitting and receiving information includes:
a generating unit 901 configured to generate first information; and
a first transmitting unit 902 configured to transmit the first information to a network device,
the first information being information on artificial intelligence/machine learning (AI/ML) in wireless communication.

In some embodiments, the apparatus further includes:
a first receiving unit 903 configured to receive second information from the network device, the second information being used to instruct the terminal equipment to generate the first information and transmit the first information to the network device.

In some embodiments, the second information indicates content of the first information, or the second information does not indicate content of the first information and only requires the terminal equipment to transmit the first information.

In some embodiments, the second information indicates a reporting priority of the content of the first information, and the terminal equipment respectively reports corresponding content of the first information according to the priorities.

In some embodiments, the content of the first information at least includes first capability information and second capability information, and the second information instructs the terminal equipment to preferentially report one of the first capability information and the second capability information, or
the content of the first information at least include a first part and a second part in the first capability information, and the second information instructs the terminal equipment to preferentially report one of the first part and the second part.

In some embodiments, the second information is transmitted via RRC signaling or LPP signaling or other signaling, and/or, the first information is transmitted via RRC signaling or LPP signaling or other signaling.

In some embodiments, the first information is at least one piece of the following information:
a terminal feature or a feature group, the terminal feature or the feature group being related to artificial intelligence/machine learning (AI/ML) in wireless communication;
functionality information, the functionality information being related to artificial intelligence/machine learning (AI/ML) in wireless communication; and
other capability information, the other capability information being existing capability information related to artificial intelligence/machine learning (AI/ML).

In some embodiments, the capability at least includes one or more of the following capabilities or a capability obtained by combining multiple following capabilities:
a capability to support channel measurement contents needed in application of artificial intelligence/machine learning (AI/ML) in wireless communication;
a capability to support reference signal configuration;
a capability to support artificial intelligence/machine learning (AI/ML) use cases in wireless communication;
a capability to support artificial intelligence/machine learning (AI/ML) lifecycle management in wireless communication; and
a capability to support artificial intelligence/machine learning (AI/ML) model generalization in wireless communication.

In some embodiments, the capability at least includes a capability to support combination of artificial intelligence/machine learning (AI/ML) use cases in wireless communication and artificial intelligence/machine learning (AI/ML) lifecycle management in wireless communication, the capability to support combination of artificial intelligence/machine learning (AI/ML) use cases in wireless communication and artificial intelligence/machine learning (AI/ML) lifecycle management in wireless communication at least comprising one or more of data collection, model storage, model training, and model supervision,
and/or,
the capability to support artificial intelligence/machine learning (AI/ML) model generalization in wireless communication is a capability to support artificial intelligence/machine learning (AI/ML) model generalization in wireless communication for specific use cases.

In some embodiments, the first receiving unit 903 further receives third information from the network device, the third information being used to instruct the terminal equipment to generate the first information and transmit the first information to the network device.

In some embodiments, the third information is transmitted via RRC signaling or LPP signaling or other signaling, and/or, the first information is transmitted via RRC signaling or LPP signaling or other signaling.

In some embodiments, the third information includes first configuration information, the first configuration information requiring the terminal equipment to report the first information, or, the third information includes first configuration information and second configuration information, wherein the first configuration information requires the terminal equipment to report the first information, and the second configuration information includes one or more of the content of the first information reported by the terminal equipment, a scope of the content of the first information reported by the terminal equipment and reporting timing of the first information by the terminal equipment.

In some embodiments, the apparatus further comprises a determining unit configured to determine whether a first condition is satisfied after the third information is received,
when the first condition is satisfied, the terminal equipment generates and transmits the first information to the first network device, wherein the first condition is that:
the terminal equipment has not transmitted the first information to the first network device after receiving the third information, or,
the terminal equipment has transmitted the first information to the first network device after receiving the third information, the first information currently needing to be reported is different from the first information reported last time, and a timer related to reporting of the first information is not running.

In some embodiments, when the first condition is satisfied, the terminal equipment further sets a timer related to the report of the first information. For example, the terminal equipment has not transmitted the first information to the first network device after receiving the third information, or, the terminal equipment has transmitted the first information to the first network device after receiving the third information, the first information that needs to be reported currently is different from the first information reported last time, and a timer related to reporting of the first information is not running;
the terminal equipment sets the timer related to the reporting of the first information, and transmits the first information to the first network device.

In some embodiments, the determining unit is further configured to determine whether a second condition is satisfied after the third information is received,
when the second condition is satisfied, the terminal equipment generates and transmits the first information to the second network device,
and the second condition is identical to or partially identical to or different from the first condition.

In some embodiments, the timer is configured with one or more,
according to a content of the third information, the terminal equipment selects different timers for action, and/or,
each said timer operates independently, or, at least two of said timer operate jointly.

In some embodiments, the terminal equipment generates and transmits the first information to the first network device according to a predetermined regulation.

It should be noted that the components or modules related to this disclosure are only described above. However, this disclosure is not limited thereto, and the apparatus 900 for transmitting and receiving information may further include other components or modules, and reference may be made to related techniques for particulars of these components or modules.

Furthermore, for the sake of simplicity, connection relationships between the components or modules or signal profiles thereof are only illustrated in FIG. 9. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

It can be seen from the above embodiment that the terminal equipment transmits information related to artificial intelligence/machine learning (AI/ML) in wireless communication to the network device. Hence, a feedback and communication mechanism for AI/ML-related information may be established between the terminal equipment and the network device, thereby efficiently supporting applications of AI/ML algorithms in wireless communication networks.

### Embodiment of a fifth aspect

The embodiments of this disclosure provide an apparatus for transmitting and receiving information. The apparatus may be, for example, a first network device, or one or some components or assemblies configured in the first network device. This embodiment corresponds to the embodiment of the second aspect, and contents in this embodiment identical to those in the embodiments of the first and second aspects shall not be described herein any further.

FIG. 10 is a schematic diagram of the apparatus for transmitting and receiving information of an embodiments of this disclosure. As shown in FIG. 10, an apparatus 1000 for transmitting and receiving information includes:
a second receiving unit 1001 configured to receive first information from a terminal equipment, the first information being related to artificial intelligence/machine learning (AI/ML) in wireless communication.

In some embodiments, the apparatus further includes:
a second transmitting unit 1002 configured to transmit second information and/or third information to the terminal equipment, wherein the second information and/or the third information is/are used to instruct the terminal equipment to generate the first information and transmit the first information to the first network device.

In some embodiments, the apparatus further reconfigures a functionality according the first information, or the apparatus does not reconfigure a functionality, the functionality being related to artificial intelligence/machine learning (AI/ML) in wireless communication, and/or,
the apparatus further requires to perform reporting of information according to the first information, and/or,
the apparatus further indicates a model-related operation according to the first information.

Reference may be made to the disclosure contained in the embodiment of the first aspect for specific contents of the first information, the second information and the third information, which shall not be repeated herein any further.

It should be noted that the components or modules related to this disclosure are only described above. However, this disclosure is not limited thereto, and the apparatus 1000 for transmitting and receiving information may further include other components or modules, and reference may be made to related techniques for particulars of these components or modules.

Furthermore, for the sake of simplicity, connection relationships between the components or modules or signal profiles thereof are only illustrated in FIG. 10. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

It can be seen from the above embodiment that the terminal equipment transmits information related to artificial intelligence/machine learning (AI/ML) in wireless communication to the network device. Hence, a feedback and communication mechanism for AI/ML-related information may be established between the terminal equipment and the network device, thereby efficiently supporting applications of AI/ML algorithms in wireless communication networks.

### Embodiment of a sixth aspect

The embodiments of this disclosure provide an apparatus for transmitting and receiving information. The apparatus may be, for example, a second network device, or one or some components or assemblies configured in the second network device. This embodiment corresponds to the embodiment of the third aspect, and contents in this embodiment identical to those in the embodiment of the third aspect shall not be described herein any further.

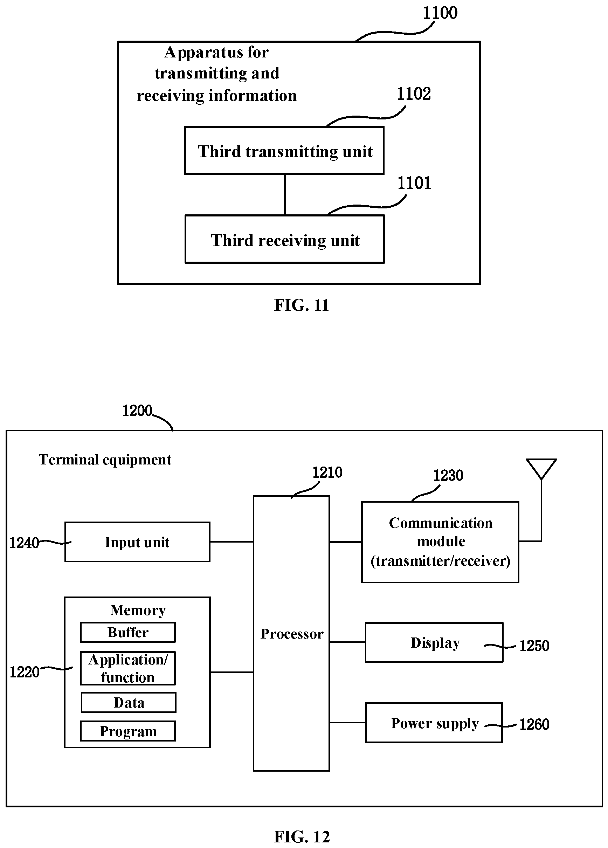

FIG. 11 is a schematic diagram of the apparatus for transmitting and receiving information of an embodiments of this disclosure. As shown in FIG. 11, an apparatus 1100 for transmitting and receiving information includes:
a third receiving unit 1101 configured to receive first information from a terminal equipment, the first information being related to artificial intelligence/machine learning (AI/ML) in wireless communication.

In some embodiments, the apparatus further includes:
a third transmitting unit 1102 configured to transmit second information and/or third information to the terminal equipment, wherein the second information and/or the third information is/are used to instruct the terminal equipment to generate the first information and transmit the first information to the second network device.

Reference may be made to the disclosure contained in the embodiment of the first aspect for specific contents of the first information, the second information and the third information, which shall not be repeated herein any further.

In some embodiments, the apparatus further reconfigures a functionality according the first information, or the apparatus does not reconfigure a functionality, the functionalities being related to artificial intelligence/machine learning (AI/ML) in wireless communication, and/or,
the apparatus further requires to perform reporting of information according to the first information, and/or,
the apparatus further indicates a model-related operation according to the first information.

It should be noted that the components or modules related to this disclosure are only described above. However, this disclosure is not limited thereto, and the apparatus 1100 for transmitting and receiving information may further include other components or modules, and reference may be made to related techniques for particulars of these components or modules.

Furthermore, for the sake of simplicity, connection relationships between the components or modules or signal profiles thereof are only illustrated in FIG. 11. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

It can be seen from the above embodiment that the terminal equipment transmits information related to artificial intelligence/machine learning (AI/ML) in wireless communication to the network device. Hence, a feedback and communication mechanism for AI/ML-related information may be established between the terminal equipment and the network device, thereby efficiently supporting applications of AI/ML algorithms in wireless communication networks.

### Embodiment of a seventh aspect

The embodiments of this disclosure provide a terminal equipment, including the apparatus for transmitting and receiving information described in the embodiment of the fifth aspect.

FIG. 12 is a schematic diagram of a systematic structure of the terminal equipment of the embodiments of this disclosure. As shown in FIG. 12, a terminal equipment 1200 may include a processor 1210 and a memory 1220, the memory 1220 being coupled to the processor 1210. It should be noted that this figure is illustrative only, and other types of structures may also be used, so as to supplement or replace this structure and achieve a telecommunications function or other functions.

In one implementation, the functions of the apparatus for transmitting and receiving information may be integrated into the processor 1210.

The processor 1210 is configured to: generate first information; and transmit the first information to a network device, the first information being information on artificial intelligence/machine learning (AI/ML) in wireless communication.

In another implementation, the apparatus for transmitting and receiving information and the processor 1210 may be configured separately; for example, the apparatus for transmitting and receiving information may be configured as a chip connected to the processor 1210, and the functions of the apparatus for transmitting and receiving information are executed under control of the processor 1210.

As shown in FIG. 12, the terminal equipment 1200 may further include a communication module 1230, an input unit 1240, a display 1250, and a power supply 1260. It should be noted that the terminal equipment 1200 does not necessarily include all the parts shown in FIG. 12, and the above components are not necessary. Furthermore, the terminal equipment 1200 may include parts not shown in FIG. 12, and the related art may be referred to.

As shown in FIG. 12, the processor 1210 is sometimes referred to as a controller or an operational control, which may include a microprocessor or other processor devices and/or logic devices. The processor 1210 receives input and controls operations of components of the terminal equipment 1200.

The memory 1220 may be, for example, one or more of a buffer memory, a flash memory, a hard drive, a mobile medium, a volatile memory, a nonvolatile memory, or other suitable devices, which may store various data, etc., and furthermore, store programs executing related information. And the processor 1210 may execute programs stored in the memory 1220, so as to realize information storage or processing, etc. Functions of other parts are similar to those of the related art, which shall not be described herein any further. The parts of the terminal equipment 1200 may be realized by specific hardware, firmware, software, or any combination thereof, without departing from the scope of this disclosure.

It can be seen from the above embodiment that the terminal equipment transmits information related to artificial intelligence/machine learning (AI/ML) in wireless communication to the network device. Hence, a feedback and communication mechanism for AI/ML-related information may be established between the terminal equipment and the network device, thereby efficiently supporting applications of AI/ML algorithms in wireless communication networks.

### Embodiment of an eighth aspect

The embodiments of this disclosure provide a network device, including the apparatus for transmitting and receiving information described in the embodiment of the fifth aspect. The network device is a first network device.

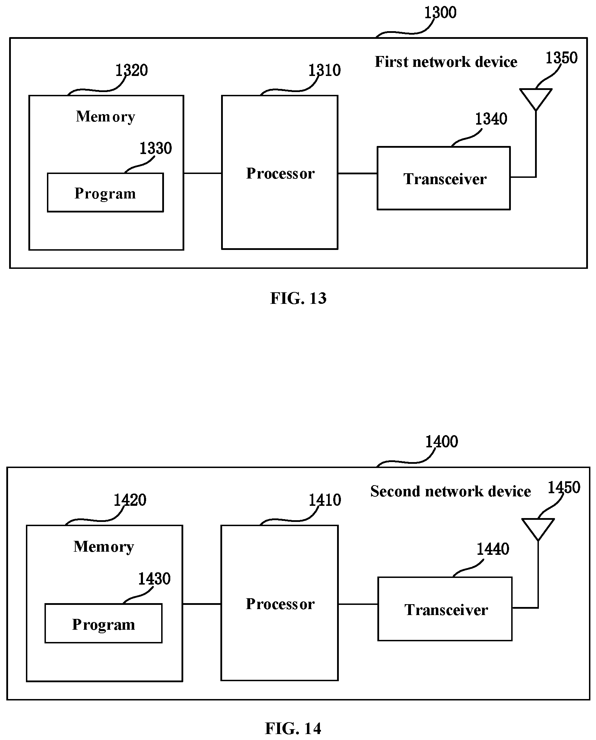

FIG. 13 is a block diagram of a systematic structure of the first network device of the embodiments of this disclosure. As shown in FIG. 13, a first network device 1300 may include a processor 1310 and a memory 1320, the memory 1320 being coupled to the processor 1310. Wherein, the memory 1320 may store various data, and furthermore, it may store a program 1330 for information processing, and execute the program 1330 under control of the processor 1310.

In one implementation, functions of the apparatus for transmitting and receiving information may be integrated into the processor 1310.

The processor 1310 may be configured to: receive first information from a terminal equipment, the first information being related to artificial intelligence/machine learning (AI/ML) in wireless communication.

In another implementation, the apparatus for transmitting and receiving information and the processor 1310 may be configured separately; for example, the apparatus for transmitting and receiving information may be configured as a chip connected to the processor 1310, and the functions of the apparatus for transmitting and receiving information are executed under control of the processor 1310.

Furthermore, as shown in FIG. 13, the first network device 1300 may include a transceiver 1304, and an antenna 1305, etc. Wherein, functions of the above components are similar to those in the related art, and shall not be described herein any further. It should be noted that the first network device 1300 does not necessarily include all the parts shown in FIG. 13, and furthermore, the first network device 1300 may include parts not shown in FIG. 13, and the related art may be referred to.

It can be seen from the above embodiment that the terminal equipment transmits information related to artificial intelligence/machine learning (AI/ML) in wireless communication to the network device. Hence, a feedback and communication mechanism for AI/ML-related information may be established between the terminal equipment and the network device, thereby efficiently supporting applications of AI/ML algorithms in wireless communication networks.

### Embodiment of a ninth aspect

The embodiments of this disclosure provide a network device, including the apparatus for transmitting and receiving information described in the embodiment of the sixth aspect. The network device is a second network device.

FIG. 14 is a block diagram of a systematic structure of the second network device of the embodiments of this disclosure. As shown in FIG. 14, a second network device 1400 may include a processor 1410 and a memory 1420, the memory 1420 being coupled to the processor 1410. Wherein, the memory 1420 may store various data, and furthermore, it may store a program 1430 for information processing, and execute the program 1430 under control of the processor 1410.

In one implementation, functions of the apparatus for transmitting and receiving information may be integrated into the processor 1410.

The processor 1410 may be configured to: receive first information from a terminal equipment, the first information being related to artificial intelligence/machine learning (AI/ML) in wireless communication.

In another implementation, the apparatus for transmitting and receiving information and the processor 1410 may be configured separately; for example, the apparatus for transmitting and receiving information may be configured as a chip connected to the processor 1410, and the functions of the apparatus for transmitting and receiving information are executed under control of the processor 1410.

Furthermore, as shown in FIG. 14, the second network device 1400 may include a transceiver 1440, and an antenna 1450, etc. Wherein, functions of the above components are similar to those in the related art, and shall not be described herein any further. It should be noted that the second network device 1400 does not necessarily include all the parts shown in FIG. 14, and furthermore, the second network device 1400 may include parts not shown in FIG. 14, and the related art may be referred to.

It can be seen from the above embodiment that the terminal equipment transmits information related to artificial intelligence/machine learning (AI/ML) in wireless communication to the network device. Hence, a feedback and communication mechanism for AI/ML-related information may be established between the terminal equipment and the network device, thereby efficiently supporting applications of AI/ML algorithms in wireless communication networks.

### Embodiment of a tenth aspect

The embodiments of this disclosure provide a communication system, including at least one of the network device as described in the embodiment of the seventh aspect, the terminal equipment as described in the embodiment of the eighth aspect and the network device as described in the embodiment of the ninth aspect.

For example, reference may be made to FIG. 1 for a structure of the communication system.

As shown in FIG. 1, the communication system 100 includes the first network device 101, the second network device 102 and the terminal equipment 103. The terminal equipment 103 is identical to the terminal equipment described in the embodiment of the seventh aspect, the first network device 101 is identical to the network device described in the embodiment of the eighth aspect, and the second network device 102 is identical to the network device described in the embodiment of the ninth aspect, with repeated contents being not going to be described herein any further.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in FIG. 9 may either correspond to software modules of procedures of a computer program, or correspond to hardware modules. Such software modules may respectively correspond to the steps shown in FIG. 2. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the principle of this disclosure, and such variants and modifications fall within the scope of this disclosure.

As to the implementations including the above embodiments, following supplements are further disclosed.
1. A method for transmitting and receiving information, the method including:
   generating first information by a terminal equipment; and
   transmitting the first information by the terminal equipment to a network device,
   the first information being information on artificial intelligence/machine learning (AI/ML) in wireless communication.
2. The method according to supplement 1, wherein,
   the first information is capability information and/or condition information related to artificial intelligence/machine learning (AI/ML) in wireless communication.
3. The method according to supplement 2, wherein,
   the method further includes: receiving second information by the terminal equipment from a first network device; and
   generating the capability information by the terminal equipment according to the second information and transmitting the capability information to the first network device.
4. The method according to supplement 2, wherein,
   the method further includes: receiving second information by the terminal equipment from a second network device; and
   generating the capability information by the terminal equipment according to the second information and transmitting the capability information to the second network device.
5. The method according to supplement 2, wherein,
   the method further includes: receiving third information by the terminal equipment from a first network device; and
   generating the condition information by the terminal equipment according to the third information and transmitting the condition information to the first network device.
6. The method according to supplement 2, wherein,
   the method further includes: receiving third information by the terminal equipment from a second network device; and
   generating the condition information by the terminal equipment according to the third information and transmitting the condition information to the second network device.

## Claims

1. An apparatus for transmitting and receiving information, provided in a terminal equipment, the apparatus comprising:
a generating unit configured to generate first information, the first information being information on artificial intelligence/machine learning (AI/ML) in wireless communication; and
a first transmitting unit configured to transmit the first information to a network device.

2. The apparatus according to claim 1, wherein the apparatus further comprises:
a first receiving unit configured to receive second information from the network device, the second information being used to instruct the terminal equipment to generate the first information and transmit the first information to the network device.

3. The apparatus according to claim 2, wherein,
the second information indicates content of the first information, or the second information does not indicate content of the first information and only requires the terminal equipment to transmit the first information.

4. The apparatus according to claim 3, wherein,
the second information indicates a reporting priority of the content of the first information, and the terminal equipment respectively reports corresponding content of the first information according to the reporting priority.

5. The apparatus according to claim 4, wherein,
the content of the first information at least comprises first capability information and second capability information, and the second information instructs the terminal equipment to preferentially report one of the first capability information and the second capability information, or
the content of the first information at least comprises a first part and a second part in first capability information, and the second information instructs the terminal equipment to preferentially report one of the first part and the second part.

6. The apparatus according to claim 2, wherein,
the second information is transmitted via RRC signaling or LPP signaling or other signaling, and/or,
the first information is transmitted via RRC signaling or LPP signaling or other signaling.

7. The apparatus according to claim 2, wherein the first information is at least one piece of the following information:
a terminal feature or a feature group, the terminal feature or the feature group being related to AI/ML in wireless communication;
functionality information, the functionality information being related to AI/ML in wireless communication; or
other capability information, the other capability information being existing capability information related to AI/ML.

8. The apparatus according to claim 7, wherein the capability at least comprises one or more of the following capabilities or a capability obtained by combining multiple following capabilities:
a capability to support channel measurement content needed in application of AI/ML in wireless communication;
a capability to support reference signal configuration;
a capability to support AI/ML an use case in wireless communication;
a capability to support AI/ML lifecycle management in wireless communication; or
a capability to support AI/ML model generalization in wireless communication.

9. The apparatus according to claim 8, wherein,
the capability at least comprises a capability to support combination of an AI/ML use case in wireless communication and AI/ML lifecycle management in wireless communication, the capability to support combination of an AI/ML use case in wireless communication and AI/ML lifecycle management in wireless communication at least comprising one or more of data collection, model storage, model training, or model supervision,
and/or,
the capability to support AI/ML model generalization in wireless communication is a capability to support AI/ML model generalization in wireless communication for a specific use case.

10. The apparatus according to claim 1, wherein,
a first receiving unit further receives third information from the network device, the third information being used to instruct the terminal equipment to generate the first information and transmit the first information to the network device.

11. The apparatus according to claim 10, wherein,
the third information is transmitted via RRC signaling or LPP signaling or other signaling, and/or,
the first information is transmitted via RRC signaling or LPP signaling or other signaling.

12. The apparatus according to claim 10, wherein,
the third information comprises first configuration information, the first configuration information requiring the terminal equipment to report the first information, or,
the third information comprises first configuration information and second configuration information, the first configuration information requires the terminal equipment to report the first information, and the second configuration information comprises one or more of content of the first information reported by the terminal equipment, a scope of content of the first information reported by the terminal equipment or reporting timing of the first information by the terminal equipment.

13. The apparatus according to claim 10, wherein the network device comprises a first network device,
the apparatus further comprises a determining unit configured to determine whether a first condition is satisfied after the third information is received,
when the first condition is satisfied, the terminal equipment generates and transmits the first information to the first network device, the first condition is that:
the terminal equipment has not transmitted the first information to the first network device after receiving the third information, or,
the terminal equipment has transmitted the first information to the first network device after receiving the third information, the first information currently needing to be reported is different from the first information reported last time, and a timer related to reporting of the first information is not running.

14. The apparatus according to claim 13, wherein,
when the first condition is satisfied, the terminal equipment further sets the timer related to reporting of the first information.

15. The apparatus according to claim 13, wherein the network device further comprises a second network device,
the determining unit is further configured to determine whether a second condition is satisfied after the third information is received,
when the second condition is satisfied, the terminal equipment generates and transmits the first information to the second network device,
the second condition is identical to or partially identical to or different from the first condition.

16. The apparatus according to claim 14, wherein,
the timer is configured with one or more,
according to content of the third information, the terminal equipment selects different timers for action, and/or,
each said timer operates independently, or, at least two of said timer operate jointly.

17. The apparatus according to claim 1, wherein,
the terminal equipment generates and transmits the first information to a first network device according to a predetermined regulation.

18. An apparatus for transmitting and receiving information, provided in a first network device, the apparatus comprising:
a second receiving unit configured to receive first information from a terminal equipment, the first information being related to artificial intelligence/machine learning (AI/ML) in wireless communication; and
a second transmitting unit configured to transmit second information and/or third information to the terminal equipment,
the second information and/or the third information is/are used to instruct the terminal equipment to generate the first information and transmit the first information to the first network device.

19. The apparatus according to claim 18, wherein,
the apparatus further reconfigures a functionality according the first information, or the apparatus does not reconfigure a functionality,
the functionality being related to AI/ML in wireless communication, and/or,
the apparatus further requires to perform reporting of information according to the first information, and/or,
the apparatus further indicates a model-related operation according to the first information.

20. An apparatus for transmitting and receiving information, provided in a second network device, the apparatus comprising:
a third receiving unit configured to receive first information from a terminal equipment, the first information being related to artificial intelligence/machine learning (AI/ML) in wireless communication; and
a third transmitting unit configured to transmit second information and/or third information to the terminal equipment,
the second information and/or the third information is/are used to instruct the terminal equipment to generate the first information and transmit the first information to the second network device.
